Europäisches Patentamt

European Patent Office

Office européen des brevets

(19)

(11) Veröffentlichungsnummer: **0 031 410**
**B1**

# (12) EUROPÄISCHE PATENTSCHRIFT

(45) Veröffentlichungstag der Patentschrift:
**25.01.84**

(21) Anmeldenummer: **80106369.4**

(22) Anmeldetag: **20.10.80**

(51) Int. Cl.³: **G 21 C 19/46**

(54) **Verfahren zum Desorbieren von Spaltjod aus salpetersaurer Brennstofflösung.**

(30) Priorität: **20.12.79 DE 2951339**

(43) Veröffentlichungstag der Anmeldung:
**08.07.81 Patentblatt 81/27**

(45) Bekanntmachung des Hinweises auf die Patenterteilung:
**25.01.84 Patentblatt 84/4**

(84) Benannte Vertragsstaaten:
**BE FR GB**

(56) Entgegenhaltungen:
**DE - A - 2 241 816**
**FR - A - 2 211 723**
**FR - A - 2 277 415**

(73) Patentinhaber: **Kernforschungszentrum Karlsruhe GmbH, Weberstrasse 5, D-7500 Karlsruhe 1 (DE)**
Patentinhaber: **Nukem GmbH, Rodenbacher Chaussee 6 Postfach 11 00 80, D-6450 Hanau 11 (DE)**

(72) Erfinder: **Henrich, Edmund, Dipl.-Chem. Dr., Mozartstrasse 3, D-7521 Dettenheim (DE)**
Erfinder: **Schlich, Elmar, Dipl.-Ing. Dr., Untergasse 11, D-6466 Gründau 3 (DE)**

ACTORUM AG

## Verfahren zum Desorbieren von Spaltjod aus salpetersaurer Brennstofflösung

Die Erfindung betrifft ein Verfahren zum Desorbieren von Spaltjod nach dem Oberbegriff des Anspruches 1.

Die Rückhaltung radioaktiven Jods und dessen Verbindungen ist ein Sicherheitsproblem kerntechnischer Anlagen. Das Jod ist ein flüchtiges Spaltprodukt und wird in den Brennstoffpellets der Leichtwasser-Reaktor-Brennelemente und von der Brennelementhülle zurückgehalten. Bei der Wiederaufarbeitung eines Brennelementes ist bei Kühlzeiten > 1a das Jod 129 von radiologischer Bedeutung, das sich aufgrund seiner grossen Halbwertzeit von 1,57 $\times$ 10$^7$a in der Biosphäre anreichern kann.

Auch ohne besondere Massnahme kann bereits beim Lösen des Brennstoffes ein grosser Teil des Spaltjods durch die wasserdampfgesättigten Stickstoffoxide und evtl. eingeführte Rührluft in das Auflöserabgas desorbiert werden. Das in der Brennstofflösung zurückbleibende Restjod wird bei den folgenden Prozessoperationen über eine Vielzahl verschiedener Prozessströme verteilt und muss aus den Behälterabgasen der Aufarbeitungs- und Abfallbehandlungsanlage zurückgehalten werden.

Es ist ein Verfahren zum Desorbieren von Spaltjod aus leicht kontaminierter Salpetersäure (vgl. FR-A-2 277 415) oder Brennstofflösung bekannt, bei dem ein Teil der Lösung unter Abfall von Destillat destilliert wird.

Dieses Verfahren weist eine Reihe prozesstechnischer Nachteile auf, die insbesondere darin bestehen, dass zur Sicherstellung einer Austreibung des Spaltjods aus der Brennstofflösung bis auf einen Rest von wenigen Promille etwa bis zu 50% der Brennstofflösung abdestilliert und gehandhabt werden muss, dass bei direkter Rückführung des Destillats in den Auflöser wesentlich grössere Gasdurchsätze erforderlich werden, und dass die dadurch bewirkte Verdünnung der im Auflöserabgas enthaltenen Schadstoffe einen erheblichen Mehraufwand an Einrichtungen und Filtern erfordert und das Sicherheitsrisiko erhöht.

Es ist auch die Gegenstromdesorption des Jods aus rekombinierter Salpetersäure mit einem jodfreien, wasserdampfgesättigten Gas bekannt (vgl. FR-A-2 277 415). Dieses Gas dient sowohl zur Joddesorption als auch zum Weitertransport des Jods in eine Rückhalteeinrichtung. Dadurch kann eine weitere Verdünnung der im Auflöserabgas enthaltenen Schadstoffe bewirkt werden mit den bekannten Nachteilen für den Prozessablauf.

Es ist ferner bekannt (vgl. FR-A-2 211 723), die Desorption von Spaltjod durch Zugabe von inaktivem Trägerjod zu beschleunigen.

Der Erfindung liegt die aufgabe zugrunde, ein Verfahren zu entwickeln, bei dem eine hohe Effektivität der Austreibung des Spaltjods aus einer Kernbrennstofflösung erreichbar ist und gleichzeitig eine Verteilung des Spaltjods auf mehrere Prozessströme (Abgas und Destillat) und die Handhabung eines Destillats ausgeschlossen wird, so dass im Interesse einer Fernbedienbarkeit der erforderlichen Einrichtungen eine Vereinfachung der Prozessführung erzielt wird.

Diese Aufgabe wird erfindungsgemäss durch das im kennzeichnenden Teil des Anspruches 1 angegebene Verfahren gelöst.

Nm$^3$ sind m$^3$ bei Normalbedingungen.

Die mit dem vorgeschlagenen Verfahren erzielten Vorteile bestehen insbesondere darin, dass die Handhabung jodhaltiger Destillate entfällt, dass infolge der wesentlich verringerten Gasmenge das Reinigen der Abgase beträchtlich erleichtert wird, und dass die Konstanthaltung des Flüssigkeitsniveaus im Auflöser sichergestellt ist.

Das vorgeschlagene Verfahren wird anhand der Zeichnungen näher erläutert.

Es zeigen

Fig. 1a schematische Darstellung einer Einrichtung zum Desorbieren von Jod aus einer Brennstofflösung durch Destillation,

Fig. 1b schematische Darstellung einer Einrichtung zum Desorbieren von Jod aus eine Brennstofflösung durch Kochen unter Rückfluss,

Fig. 2 Prozessführung einer Joddesorption durch Destillation,

Fig. 3 Prozessführung einer Joddesorption durch Kochen unter Rückfluss.

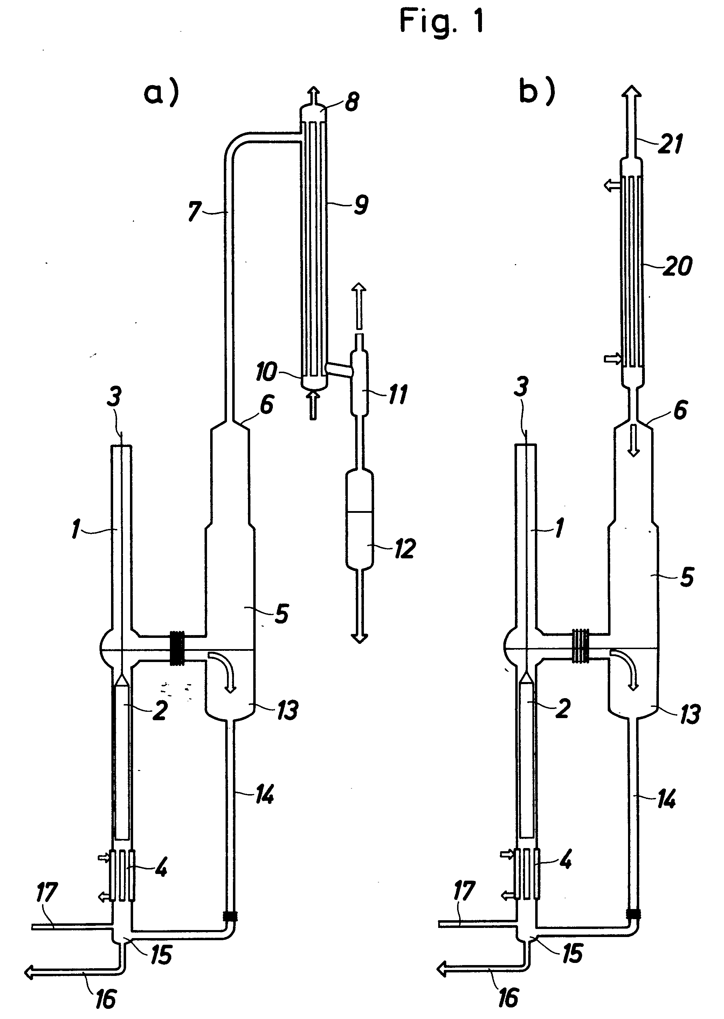

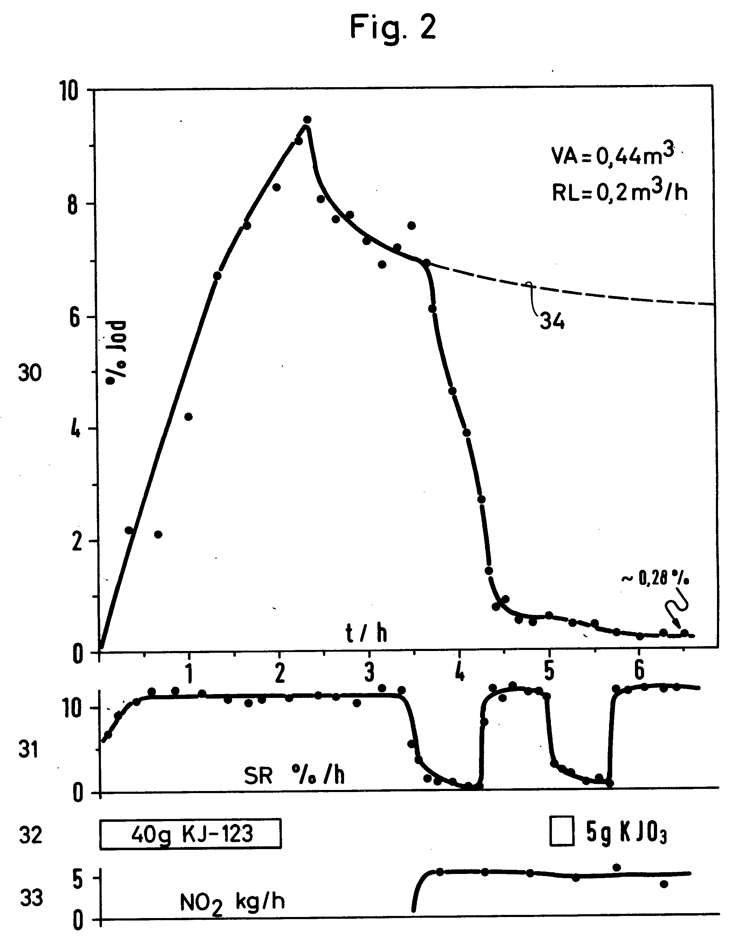

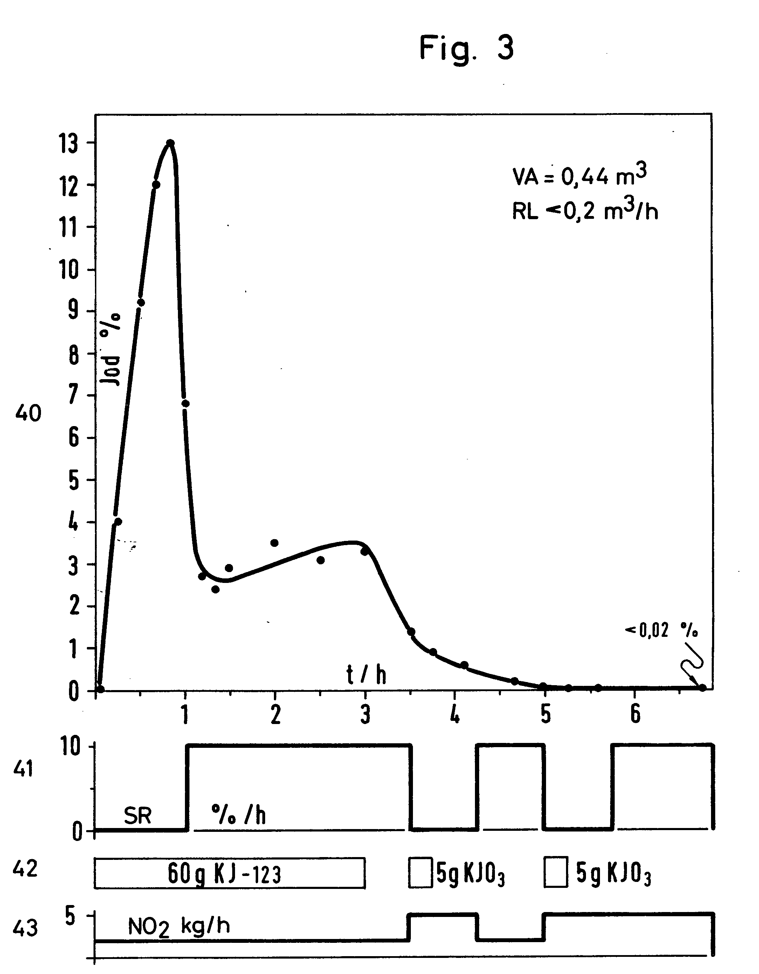

Das die Joddesorption durch Destillation betreffende Ausführungsbeispiel nach den Figuren 1a und 2 bildet den Ausgangspunkt der Erfindung, deren Ausgestaltung durch die Figuren 1b und 3 erläutert wird.

Die in Fig. 1 dargestellte Einrichtung zum Desorbieren von Jod besteht im wesentlichen aus einem Auflöser 1, in den ein Korb 2 mit einem Seilzug 3 einführbar ist. Der Korb 2 ist mit mechanisch, z.B. durch eine Schere zerkleinerten abgebrannten Reaktorbrennelementen gefüllt. Der Auflöser 1 enthält z.B. Salpetersäure zum Auflösen des Kernbrennstoffes. Eine Heizeinrichtung 4 erwärmt die Salpetersäure und beschleunigt dadurch den Lösungsvorgang. In den Auflöser kann ausserdem zum Intensivieren des Prozesses Rührluft eingeleitet werden. Die im Auflöser sich bildende Dampfphase sammelt sich in einem dem Auflöser 1 nachgeordneten Brüdenraum 5, dessen oberes Ende 6 über eine erste Rohrleitung 7 mit dem oberen Ende 8 eines rohrförmigen Kondensators 9 verbunden ist, in dem das Kühlwasser von unten nach oben und die kondensierende Dampfphase von oben nach unten strömt (absteigender Kondensator). An das untere Ende 10 des Kondesators 9 ist über einen Phasentrenner 11 eine Vorlage 12 zum Aufnehmen des Kondensates angeschlossen.

Der Umlaufbehälter 13 des Auflösers 1 ist über eine zweite Rohrleitung 14 zum Zurückführen der heissen Salpetersäure mit dem unteren Ende 15 des Heizbeines des Auflösers 1 verbunden. Die das Uran enthaltende Lösung wird über einen Auslass 16 abgeführt. Über eine ebenfalls am unteren Ende 15 des Heizbeines des Auflösers 1 angeschlossene dritte Rohrleitung 17 werden neben der Rührluft auch Stickstoffoxide in den Auflöser 1 eingeleitet.

Die Joddestillation erfordert jedoch eine zusätzliche Behandlung des jodhaltigen, der Vorlage 12 zu entnehmenden Destillates, sowie geeignete Massnahmen zur ausreichenden Konstanthaltung des Niveaus im Auflöser 1.

Diese Nachteile werden vermieden, wenn ein weitgehend jodfreies Destillat direkt in den Auflöser 1 zurückgeführt werden kann.

Würde der Ausgang der Vorlage 12 der in Fig. 1a dargestellten Einrichtung direkt in die Brennstofflösung zurückgeführt, so müsste die in den absteigenden Kondensator 9 einzuleitende Spülgasmenge wesentlich erhöht werden, damit das Jod abgeführt werden könnte. Das kann z.B. durch Einspeisen grosser Rührluftmengen in die Brennstofflösung und/oder durch Einspeisen von Spülluft in die Abgasphase zwischen Brennstofflösung und Kondensator erreicht werden.

Diese nachteilige Erhöhung der anfallenden Gasmenge wird vermieden durch Kochen der Kernbrennstofflösung unter Rückfluss des Kondensates in den Auflöser, z.B. unter Verwendung einer in Fig. 1b dargestellten Einrichtung.

Die Anordnung des Auflösers 1 und des Brüdenraumes 5 ist im wesentlichen identisch mit Fig. 1a. An das obere Ende 6 des Brüdenraumes 5 ist jedoch ein Rückflusskühler 20 angeschlossen, so dass aus dem Rückflusskühler austretendes Kondensat direkt durch den Brüdenraum 5 in den Umlaufbehälter 13 gelangt und über die zweite Rohrleitung 14 zum Heizbein 15 des Auflösers 1 zurückgeführt wird und dessen Flüssigkeitsniveau konstant hält.

Der in den Rückflusskühler 20 eintretende Dampf desorbiert das Jod aus dem zurücklaufenden Kondensat. Die geringe Spülgasmenge hat lediglich die Aufgabe, am Ausgang 21 des Rückflusskühlers 20 einen kondensationsfreien Jodtransport sicherzustellen. Je höher die Austrittstemperatur liegt, desto kleiner ist die erforderliche Transportgasmenge.

Die Prozessführung einer Joddesorption durch Destillation mit einer Anordnung nach Fig. 1a ist in Fig. 2 als Funktion der Zeit dargestellt.

Das Diagramm 30 zeigt den zeitlichen Verlauf des Restjodgehaltes der Brennstofflösung. Um die Spaltjodfreisetzung beim Lösen des Kernbrennstoffes zu simulieren, wird entsprechend Diagramm 31 eine Siederate von ca. 12% je Stunde eingestellt und mit J-123 markiertes Kaliumjodid entsprechend Diagramm 32 in die siedende Salpetersäure eindosiert. Insgesamt werden 40 g KJ-123 über 2 Stunden verteilt eingeleitet. Dabei steigt der Jodgehalt an, erreicht nach Ende der Joddosierung einen Wert von 9,5% und würde dann entsprechend dem Kurvenzug 34 innerhalb von ca. 4 Stunden auf einen Restjodgehalt von ca. 6% absinken, der im wesentlichen aus nicht mehr destillierbaren Jodspezies wie Jodat bestehen. Durch Einblasen von etwa 5 Kg je Stunde Stickstoffdioxid entsprechend Diagramm 33 wird dieses Jod zu destillierbarem Jod reduziert.

Bei Beginn der Zugabe von Stickstoffdioxid wird die Wärmezufuhr eingestellt. Das geschieht auch im praktischen Betrieb, weil zu diesem Zeitpunkt eine schnelle Zersetzung der bei der Absorption von $NO_2$ gebildeten salpetrigen Säure vermieden wird. Etwa 20 Minuten nach Beginn der Stickstoffdioxideinleitung sind Teile des nicht mehr destillierbaren Jods zu destillierbarem Jod reduziert, so dass der Restjodgehalt innerhalb von ca. 1 Stunde von 7% auf 0,7% abfällt. Trotz Erhöhung der Siederate und weiterer Einleitung von Stickstoffdioxid erniedrigt sich der Restjodgehalt zunächst nur langsam. Eine Zugabe von 5 Kg Kaliumjodat als inaktives Trägerjodat ermöglicht die Entfernung des Restjods auf rund 0,3%. Das Volumen des Auflösers VA hatte eine Grösse von 0,44 m³, es wurden 0,2 m³/h Rührluft RL eingeleitet.

Die Prozessführung einer Joddesorption durch Kochen unter Rückfluss mit einer Anordnung entsprechend Fig. 1b ist in Fig. 3 als Funktion der Zeit dargestellt. Das Diagramm 40 zeigt den zeitlichen Verlauf des Restjodgehaltes der Brennstofflösung. Zur Simulation der Spaltjodfreisetzung beim Lösen des Kernbrennstoffes wird entsprechend Diagramm 41 zunächst eine Siederate SR von Null % je Stunde eingestellt und über 3 Stunden verteilt nach Diagramm 42   60 g mit Jod-123 markiertes Kaliumjodid eingeleitet und etwa 2 Kg Stickstoffdioxid je Stunde gemäss Diagramm 43 eingespeist. Der Jodgehalt steigt zunächst auf 13% an, um nach etwa 1 Stunde beim Ansteigen der Siederate auf 10% je Stunde auf ca. 2,5% steil abzufallen. Der bei unveränderten Prozessbedingungen in den folgenden zwei Stunden auftretende Anstieg des Jodgehaltes auf ca. 3,5% endet gleichzeitig mit der Einspeisung des Kaliumjodids nach Diagramm 42.

Durch insgesamt etwa dreistündiges Kochen, gegen Ende des Prozesses nach Diagramm 43 erhöhte Stickstoffdioxideinspeisung und zweimalige Zugabe von je 5 g Kaliumjodat als inaktives Trägerjodat wird ein Restjodgehalt von rund einer Grössenordnung unter den erforderlichen 0,2% erreicht.

Der Jodtransport nach dem Rückflusskondensator erfolgt vor allem durch Stickstoffoxide, die nur etwa zur Hälfte in der Brennstofflösung und im Rückflusskühler absorbiert werden. Die Kondensatorausgangstemperatur betrug im Mittel rund 80°C. Die simulierte Brennstofflösung enthielt etwa 10 mg/l an organischen Verunreinigungen.

Das Volumen des Auflösers VA hatte auch in diesem Fall eine Grösse von 0,44 m³, es wurden jedoch weniger als 0,2 m³/h Rührluft RL eingeleitet.

In beiden Fällen war die simulierte Brennstofflösung zusammengesetzt aus einnormalem Uranylnitrat $UO_2(NO_3)_2$ und drei- bis viernormaler Salpetersäure $HNO_3$.

*Bezugszeichenliste:*
    Fig. 1a Einrichtung zur Joddesorption durch Destillation
    1  Auflöser
    2  Korb
    3  Seilzug
    4  Heizeinrichtung
    5  Brüdenraum
    6  oberes Ende von 5
    7  erste Rohrleitung
    8  oberes Ende von 9
    9  Kondensator
    10  unteres Ende von 9
    11  Phasentrenner
    12  Vorlage
    13  Umlaufbehälter
    14  zweite Rohrleitung

15 unteres Ende von 1
16 Auslass von 1
17 dritte Rohrleitung
Fig. 1b Einrichtung zur Joddesorption durch Kochen unter Rückfluss
Position 1 bis 17 wie unter Fig. 1a
20 Rückflusskühler
21 Ausgang von 20
Fig. 2 Joddesorption durch Destillation
30 Restjodgehalt in %
31 Siederate in % je h
32 Joddosierung
33 Stickstoffdioxiddosierung
34 Rest an nicht destillierbarem Jod
Fig. 3 Joddesorption durch Kochen unter Rückfluss
40 Restjodgehalt in %
41 Siederate in % je h
42 Joddosierung
43 Stickstoffdioxiddosierung
VA Auflöservolumen
SR Siederate
RL Rührluft

**Patentansprüche**

1. Verfahren zum Desorbieren von Spaltjod aus einer salpetersauren Kernbrennstoff enthaltenden Lösung hoher Radioaktivität, bei dem
a) die Desorption des Jods im wesentlichen durch Kochen der Brennstofflösung erfolgt,
b) beim Reduzieren von oxidierten Jodspezies in die Brennstofflösung Stickstoffoxide $NO_2$ oder $NO$-$NO_2$-Mischungen eingeleitet werden,
c) zum Verbessern des Desorptionsgrades und zum Beschleunigen der Desorption des Spaltjodes inaktives Trägerjod zugesetzt wird,
gekennzeichnet durch folgende Merkmale,
d) das beim Kochen der Brennstofflösung verdampfende Lösungsmittel wird kondensiert und das Kondensat im Gegenstromkontakt zu dem aufsteigenden Dampf in die Lösung zurückgeführt,
e) bei der Kondensation des Dampfes wird das Jodverteilungsgleichgewicht mehrstufig eingestellt,
f) während des Desorptionsvorganges wird zum Abführen des Jodes aus dem Kondensator eine vorbestimmte möglichst geringe Menge eines Transportgases eingesetzt, die kleiner ist als 220 $Nm^3$ je Tonne aufgelöstes Uran,
g) die Temperatur des aus dem Kondensator abgeführten Transportgases (Kondensatoraustrittstemperatur) ist in einem Bereich zwischen 40°C und unterhalb der durch den Betriebsdruck bestimmten Siedetemperatur des Wassers eingestellt,
h) für eine effektive Joddesorption ist das Produkt aus der frei wählbaren Siederate in Prozent je Stunde und der unabhängig von der Siederate ebenfalls frei wählbaren Siededauer in Stunden während und nach der Auflösung auf einen Wert grösser als 20% eingestellt,
i) die Stickstoffoxide $NO_2$ oder die $NO$-$NO_2$-Mischungen werden im Verlauf von einer bis einigen Stunden gegen und nach Ende der Auflösung des Kernbrennstoffes in die Brennstofflösung eingeleitet, j) die eingespeiste Stickstoffoxidmenge ist grösser als 0,4 Mol/t Uran aber kleiner als 4 Mol/t Uran,
k) die Menge des gegen Ende des Desorptionsprozesses nach Absinken des Spaltjodgehaltes auf einige Promille bis Prozent der Brennstofflösung zugesetzten inaktiven Trägerjods liegt vorzugsweise in der Grössenordnung von 5 bis 20% des Gesamtspaltjodgehaltes im aufgelösten Kernbrennstoff.

2. Verfahren nach Anspruch 1, dadurch gekennzeichnet, dass die Joddesorption der Brennstofflösung ausserhalb des Auflösers durch Kochen unter Rückfluss des Kondensates und Einleiten eines Spülgases und $NO_x$ weitergeführt wird, wobei die Gesamtmenge des Spülgases, des Destillates, der Stickstoffoxide und des Trägerjods auf die Prozessführung im Auflöser und ausserhalb des Auflösers aufgeteilt ist.

3. Verfahren nach Anspruch 1, dadurch gekennzeichnet, dass die Joddesorption nach dem Entfernen des Brennstoffkorbes mit den partiell oder vollständig ausgelaugten Hülsen im Auflöser weitergeführt wird.

4. Verfahren nach einem oder mehreren der Ansprüche 1 bis 3, dadurch gekennzeichnet, dass das Einleiten der Stickstoffoxide in die Lösung nach Abschluss des Siedens vorzugsweise bei einer wenig unterhalb des Siedepunktes liegenden Temperatur erfolgt.

5. Verfahren nach einem oder mehreren der Ansprüche 1 bis 4, dadurch gekennzeichnet, dass als Trägerjod vorzugsweise Jodat verwendet wird.

6. Verfahren nach einem oder mehreren der Ansprüche 1 bis 5, dadurch gekennzeichnet, dass das Trägerjodat nach Unterbrechung der Stickstoffoxideinspeisung in die Brennstofflösung während einer zum weitgehend homogenen Verteilen des Jodats erforderlichen Zeit eingeleitet wird.

7. Verfahren nach einem oder mehreren der Ansprüche 1 bis 6, dadurch gekennzeichnet, dass die Temperatur der aus dem Kondensator abgeführten Gasphase zwischen 60 und 90°C eingestellt wird.

8. Verfahren nach einem oder mehreren der Ansprüche 1 bis 7, dadurch gekennzeichnet, dass die insgesamt eingespeiste Stickstoffoxidmenge im Bereich von 1 bis 2 Mol/t Uran liegt.

**Claims**

1. Method for desorbing fission product iodine from a high level nitric acid solution containing nuclear fuel, by which
a) the desorption of iodine is essentially accomplished by boiling of the fuel solution;
b) nitrogen oxides $NO_2$ or $NO$-$NO_2$ mixtures are supplied to the fuel solution while oxidized iodine species are reduced;
c) inactive carrier iodine is added in order to improve the degree of desorption and to accelerate desorption of the fission product iodine;
characterized by the following features:
d) The solvent evaporating during boiling of the fuel solution is condensed and the condensate is returned into the solution in counter current contact with the rising vapor.

e) During vapor condensation the iodine distribution equilibrium is set stepwise.

f) During the process of desorption a predetermined minimum amount of a transport gas of less than 220 Nm$^3$ per ton of dissolved uranium is used in order to remove the iodine from the condenser.

g) The temperature of the transport gas removed from the condenser (condenser outlet temperature) is set within a range from 40°C to the boiling temperature of water determined by the operating pressure.

h) For the iodine desorption to become effective, the product of freely selectable boiling rate in percent per hour times the boiling duration in hours, likewise freely selectable independent of the boiling rate, is set to greater than 20% during and after dissolution.

i) The nitrogen oxide NO$_2$ or the NO-NO$_2$ mixtures are supplied to the fuel solution during one to several hours towards the end of nuclear fuel dissolution and afterwards.

j) The fed nitrogen oxide amount is greater than 0.4 Mol/ton of uranium but smaller than 4 Mol/ton uranium.

k) The amount of inactive carrier iodine added towards the end of the desorption process after the fission product iodine content has dropped to several permill to percent of fuel solution lies preferably on the order of 5 to 20% of the total fission product iodine content in the dissolved nuclear fuel.

2. Method according to claim 1, with the iodine desorption of the fuel solution continued outside the dissolver by boiling accompanied by reflow of the condensate and introduction of a scavenger gas an NO$_x$, while the total amount of scavenger gas distillate, nitrogen oxides and carrier iodine is distributed in the process within the dissolver and outside the dissolver.

3. Method according to claim 1, with the iodine desorption continued in the dissolver after withdrawal of the fuel basket containing the partially and completely leached hulls.

4. Method according to one or several of claims 1 through 3, with the nitrogen oxides fed into the solution at the end of boiling, preferably at a temperature slightly below the boiling point.

5. Method according to one or several of claims 1 through 4, with the iodate preferably used as the carrier iodine.

6. Method according to one or several of claims 1 through 5, with the carrier iodate introduced into the fuel solution after interruption of nitrogen oxide feed, during a period required for the largely homogeneous distribution of the iodate.

7. Method according to one or several of claims 1 through 6, with the temperature of the gas phase removed from the condenser set between 60 and 90°C.

8. Method according to one or several of claims 1 through 7, with the total amount of nitrogen oxide fed lying within the range of 1 to 2 Mol/ton uranium.

## Revendications

1. Procédé de désorption d'iode de fission à partir d'une solution d'acide nitrique contenant une matière combustible nucléaire à radioactivité élevée,

a) la désorption de l'iode s'effectue essentiellement par ébullition de la solution de combustible,

b) pour réduire les formes oxydées de l'iode dans la solution de combustible, on introduit des oxydes d'azote, du NO$_2$ ou des mélanges NO-NO$_2$,

c) pour améliorer le taux de désorption et accélérer la désorption de l'iode de fission, on ajoute de l'iode vecteur inactif,

procédé caractérisé en ce que:

d) pendant l'ébullition de la solution de combustible, le solvant évaporé se condense et le condesat est reconduit dans la solution avec contact à contre-courant avec la vapeur ascendante,

e) pendant la condensation de la vapeur, l'équilibre de répartition de l'iode est réglé en plusieurs étapes,

f) pendant l'opération de désorption, on met en oeuvre, pour évacuer l'iode du condenseur hors du condenseur, une quantité prédéterminée aussi faible que possible d'un gaz vecteur, cette quantité étant inférieure à 220 Nm$^3$ par tonne d'uranium dissous,

g) la température du gaz vecteur sortant du condenseur (température de sortie du condenseur) se situe dans une zone comprise entre 40°C et un degré inférieur à la température d'ébullition de l'eau déterminée par la pression de fonctionnement,

h) pour une désorption de l'iode efficace, le produit de la multiplication de la vitesse d'ébullition librement choisie, exprimée en pourcent par heure, par la durée d'ébullition choisie également librement, et indépendamment de la vitesses d'ébullition, est établi, pendant et après la dissolution, à une valeur supérieure à 20%,

i) l'oxyde d'azote NO$_2$ ou les mélanges NO-NO$_2$ sont introduits dans la solution de combustible en l'espace d'une à quelques heures, vers et après la fin de la dissolution du combustible nucléaire,

j) la quantité d'oxyde d'azote introduite est supérieure à 0,4 mole/t d'uranium mais inférieur à 4 moles/t d'uranium,

k) la quantité d'iode vecteur inactif ajoutée vers la fin de l'opération de désorption, après abaissement de la teneur en iode de fission à une proportion de quelques pourmilles à quelques pourcents de la solution de combustible, se monte de préférence à un ordre de grandeur de 5 à 20% de la teneur totale en iode de fission, dans le combustible nucléaire dissous.

2. Procédé suivant la revendication 1, caractérisé en ce que la désorption d'iode de la solution de combustible est poursuivie à l'extérieur du vase de dissolution, par ébullition sous reflux du condensat et introduction d'un gaz de lavage et de NO$_x$, la quantité totale de gaz de lavage, de destillat, d'oxyde d'azote et d'iode vecteur étant répartie entre la conduite de l'opération à l'intérieur du vase de dissolution et à l'extérieur de ce vase.

3. Procédé suivant la revendication 1, caractérisé en ce que la désorption d'iode est poursuivie dans le vase de dissolution après évacuation du panier à combustible avec les gaînes partiellement ou totalement lixiviées.

4. Procédé suivant l'une quelconque des revendications 1 à 3, caractérisé en ce que l'introduction d'oxyde d'azote dans la solution après arrêt de l'ébullition s'effectue de préférence à une température légèrement inférieure au point d'ébullition.

5. Procédé suivant l'une quelconque des revendications 1 à 4, caractérisé en ce que, comme iode vecteur, on utilise de préférence un iodate.

6. Procédé suivant l'une quelconque des revendications 1 à 5, caractérisé en ce que l'iodate vecteur est introduit dans la solution de combustible après l'arrêt de l'introduction d'oxyde d'azote, en une durée suffisante pour assurer une répartition homogène de cet iodate.

7. Procédé suivant l'une quelconque des revendications 1 à 6, caractérisé en ce que la température de la phase gazeuse éliminée du condenseur est ajustée entre 60 et 90°C.

8. Procédé suivant l'une quelconque des revendications 1 à 7, caractérisé en ce que la quantité totale d'oxyde d'azote introduite se situe aux environs de 1 à 2 moles/t d'uranium.

# Fig. 1

a)

b)

Fig. 2

0 031 410

9

# Fig. 3